# EUROPÄISCHE PATENTSCHRIFT

(11) **EP 0 983 326 B1**
(45) Veröffentlichungstag und Bekanntmachung des Hinweises auf die Patenterteilung: **12.11.2003**
(21) Anmeldenummer: 98929314.7
(22) Anmeldetag: 14.05.1998
(51) Int. Cl.: C09K 3/00, C09D 5/00, A21D 8/08, B08B 17/02

(54) **NICHTAUFTROCKNENDES, VISKOSES OBERFLÄCHEN-BEHANDLUNGSMITTEL**
NON-DRYING VISCOUS AGENT FOR TREATING SURFACES
AGENT VISQUEUX NON SICCATIF S'UTILISANT POUR TRAITER DES SURFACES

(30) Priorität: 23.05.1997 DE 19721590
(43) Veröffentlichungstag der Anmeldung: 08.03.2000
(73) Patentinhaber: Ecolab Inc., St. Paul, MN 55102-1390 (US)
(72) Erfinder: TYBORSKI, Thomas, D-40476 Düsseldorf (DE); LÜDECKE, Werner, D-40699 Erkrath (DE)
(74) Vertreter: Sternagel, Fleischer, Godemeyer & Partner Patentanwälte
(86) Internationale Anmeldenummer: EP9802849
(87) Internationale Veröffentlichungsnummer: WO98053021

(56) Entgegenhaltungen:
- WO-A-94/23000
- WO-A-96/39116
- US-A- 4 339 465
- US-A- 4 857 352
- US-A- 4 877 691
- US-A- 5 407 700

## Beschreibung

Die Erfindung betrifft die Verwendüng eines nichtauftrocknenden, viskosen Oberflächen-Behandlungsmittels, mit dem Oberflächen in der Lebensmittelindustrie vor Anhaftungen geschützt werden können. Bei den zu behandelnden Oberflächen handelt es sich zum einen um Behältnisse, die zur Aufnahme von Lebensmitteln bestimmt sind. Beispiele hierfür sind Transportkisten, Lagerbehälter, Wannen und ähnliches. Diese sind üblicherweise aus Edelstahl, emailliertem Stahl, lackiertem Stahl oder aus Kunststoffen wie beispielsweise PVC, Polyethylen oder Polypropylen. Zum anderen handelt es sich bei den Oberflächen um Oberflächen von Einrichtungen in der lebensmittelverarbeitenden Industrie wie beispielsweise um Wände, Decken, Tische, Ablagen, Rohrleitungen oder Lüftungssysteme. Diese verschmutzen in erster Linie dadurch, daß sie Staub anziehen. Diese Oberflächen bestehen beispielsweise aus Glas, Edelstahl, Aluminium, lackiertem Stahl, Zink oder verzinktem Stahl, Stein oder Keramik.

Kommen Lebensmittel mit Oberflächen in Berührung und trocknen an diesen an, entsteht eine Reihe von Problemen: erschwerte Resteentleerung von Behältern, Verluste durch anhaftende Produktreste und Schwierigkeiten bei einer nachfolgenden Reinigung.

Daher besteht Bedarf nach einem Mittel, mit dem man - ggf. nach vorheriger Reinigung - die genannten Oberflächen überzieht. Dieses Mittel soll ein Anhaften und Antrocknen von Lebensmitteln auf den genannten Oberflächen verhindern. Die Lebensmittel - beispielsweise Fleisch- und Wurstwaren - sind dann auch nach längerer Lagerung leicht und vollständig aus den Behältnissen entfernbar. Parallel hierzu besteht ein Bedarf nach einem Mittel, mit dem man sonstige Oberflächen in der lebensmittelverarbeitenden Industrie beschichten kann und das verhindert, daß Schmutz wie beispielsweise Staub fest anhaftet. Vielmehr soll die Behandlung mit dem gesuchten Mittel dazu dienen, daß die Oberflächen durch feuchtes Abwischen oder durch Abspritzen mit Wasser leicht und vollständig von den Verunreinigungen gereinigt werden können.

Die US-A- 5 407 700 beschreibt eine wäßrige Formulierung, die zur Ausbildung von Überzügen auf erhitzten Oberflächen von Gerätschaften zur Herstellung von Lebensmitteln, beispielsweise Backöfen, dienen. Diese Formulierungen enthalten neben Wasser wasserlösliche anorganische Salze, Salze von Fettsäuren, eine neutrale Fett-Komponenten, wie Fettsäure-mono-, -di- oder -triester des Glycerins, und organische Verdickungsmittel. Nach Aufbringen der wäßrigen Formulierung auf die kalte zu behandelnde Oberfläche wird das Gerät erhitzt, so daß sich unter Verdampfen von Wasser ein fester trockener Film bildet. Festgebackene Nahrungsmittel-Rückstände auf diesem Film lassen sich so leicht entfernen.

Demgegenüber ist es die Aufgabe der vorliegenden Erfindung, durch die Verwendung eines geeigneten Mittels die vorstehend aufgezeigten Problemstellungen zu lösen.

Gegenstand der vorliegenden Erfindung ist somit die Verwendung eines viskosen Oberflächenbehandlungsmittels, enthaltend:
90 bis 98,5 Gew.-% Wasser,
1 bis 4 Gew.-% einer hygroskopischen Komponente, ausgewählt aus Glycerin und Propylenglykol,
0,2 bis 2 Gew.-% Konservierungsmittel und
soviel Verdickungsmittel, daß die Viskosität der Mischung (bei 22 °C gemessen nach Brookfield, Spindel 3, 12 Umdrehungen pro Minute) im Bereich von 2 000 bis 10 000 mPas liegt, zur Bildung nichtauftrocknender Überzüge auf Oberflächen in lebensmittelverarbeitenden Betrieben und/oder auf Oberflächen, die zum Kontakt mit Lebensmitteln bestimmt sind.

Durch die erfindungsgemäß zü verwendende Kombination von Wasser, einer hygroskopischen Komponente, eines Konservierungsmittels sowie eines Verdickungs- oder Gelierhilfsmittels wird eine viskose Flüssigkeit erhalten, die auf die einleitend genannten Oberflächen aufgebracht werden kann. Das Mittel verhindert den direkten Kontakt der Lebensmittel mit der Oberfläche und damit deren Antrocknen. Die Zusätze von Konservierungsstoffen, die auch die Funktion von Antioxidantien haben können, verhindern bzw. verzögern eine Verkeimung bzw. eine Alterung des Oberflächenbehandlungsmittels.

Die enthaltenen hygroskopischen Inhaltsstoffe verhindern ein vollständiges Auftrocknen auf den Oberflächen. Lebensmittel können daher an den behandelten Oberflächen nicht antrocknen. Sich auf derartig behandelten Oberflächen abscheidender Schmutz wie beispielsweise Staub kann durch Abwischen oder Abspritzen mit Wasser leicht entfernt werden. Insgesamt ergeben sich synergistische Effekte, die zu folgenden Eigenschaften führen:
- gut haftender, nicht ablaufender Film auf allen gängigen Oberflächen wie Kunststoff, Metall, Keramik, Stein etc.
- kein völliges Austrocknen des Films
- Kontakt zu Lebensmitteln möglich
- gute Restentleerung von Lebensmittelequipment wie z.B. Transportkisten, Lagerbehälter u.a., da Produktreste auf den Oberflächen nicht auftrocknen
- deutlich verringerte Produktionsgut-Rückstände auf den Oberflächen
- erleichterte Reinigungsprozeduren, da Verunreinigungen auf den Film treffen und mit diesem leicht entfernt werden können (z.B. durch Abspülen mit Wasser).
- gute Abspülbarkeit (wasserlöslich)
- Schutz von Oberflächen bzgl. Staub- und Schmutzkontamination.
- Einsatz auf unterschiedlichsten Oberflächen möglich (Kunststoff, Glas, Keramik, Metall; auch auf empfindlichen Oberfächen wie verzinkte Metalle und Buntmetalle).

Die Verdickungsmittel bzw. Gelierhilfsmittel führen dazu, daß das Oberflächenbehandlungsmittel nach dem Aufbringen nicht vollständig abläuft, sondern einen haftenden Film ausbildet. Vorzugsweise wählt man die Art und die Konzentration der Verdickungsmittel derart, daß die Viskosität des Oberflächenbehandlungsmittels (gemessen bei 22 °C nach Brookfield mit der Spindel Nr. 3 bei 12 Umdrehungen pro Minute) vorzugsweise im Bereich zwischen etwa 4 000 und etwa 6 000 mPas liegt. Zur Einstellung dieser Viskosität ist es üblicherweise ausreichend, daß das Oberflächenbehandlungsmittel etwa 0,3 bis etwa 2 Gew.-% Verdickungsmittel enthält.

Da das Oberflächenbehandlungsmittel bei seiner erfindungsgemäßen Verwendung unmittelbar mit Lebensmitteln in Kontakt kommen kann, enthält es vorzugsweise nur solche Inhaltsstoffe, die nach der jeweils örtlichen Gesetzgebung für den Kontakt mit Lebensmitteln zugelassen sind. Für den deutschen Geltungsbereich ist hier relevant: "Verordnung über die Zulassung von Zusatzstoffen zu Lebensmitteln" (Zusatzstoffverordnung - ZZulV; §1, §2, §3, §5 Anlagen 1,2,3,5).

Demgemäß wählt man die hygroskopische Komponente aus aus Glycerin (EWG-Nr. E422) und Propylenglykol (-).

Das Konservierungsmittel ist vorzugsweise ausgewählt aus

| Stoff | EWG-Nr. |
|---|---|
| • Sorbinsäure (und deren Salze) | (E200) |
| • Natriumsorbat | (E201) |
| • Kaliumsorbat | (E202) |
| • Calciumsorbat | (E203) |
| • Benzoesäure (und deren Salze) | (E210) |
| • Citronensäure (und deren Salze) | (E330) |
| • Natriumbenzoat | (E211) |
| • Kaliumbenzoat | (E212) |
| • Calciumbenzoat | (E213) |
| • para-Hydroxibenzoesäure-ethylester | (E214) |
| • para-Hydroxibenzoesäure-ethylester Na-verbindung | (E215) |
| • para-Hydroxibenzoesäure-propylester | (E216) |
| • para-Hydroxibenzoesäure-propylester Na-verbindung | (E217) |
| • para-Hydroxibenzoesäure-methylester | (E218) |
| • para-Hydroxibenzoesäure-methylester Na-verbindung | (E219) |
| • Ameisensäure (und deren Salze) | (E236) |
| • Natriumformiat | (E237) |
| • Calciumformiat | (E238) |

Als Verdickungsmittel kommen bevorzugt in Frage:

| Stoff | EWG-Nr. |
|---|---|
| • Mono- und Diglyceride von Speisefettsäuren | (E471) |
| • Stärke (oxidativ abgebaute) | (E304) |
| • Agar Agrar | (E406) |
| • Alginate | |
| Natriumalginat | (E401) |
| Kaliumalginat | (E402) |
| Calciumalginat | (E403) |
| • Carrageen | (E407) |
| • Guarkemmehl | (E412) |
| • Johannesbrotkernmeh | (E410) |
| • Traganth | (E413) |
| • Xanthan | (E415) |
| • Cellulose | (E460) |
| • Methylcellulose | (E461) |
| • Hydroxypropylcellulose | (E463) |
| • Hydroxypropylmethylcellulose | (E464) |
| • Carboxymethylcellulose | (E466) |
| • Pektin | (E440) |
| • amidiertes Pektin | (E440) |
| • Propylenglykolalginat | (E405) |
| • Acetyliertes Distärkephosphat | (E1414) |
| • Stärkeacetat (verestert mit Essigsäureanhydrid) | (E1420) |
| • Acetyliertes Distärkeadipat | (E1422) |
| • Gummi arabicum | (E414) |
| • Gelatine | - |
| • Albumine | - |
| • Caseinate | - |

Für Anwendungen, bei denen das Oberflächenbehandlungsmittel eine Schutzschicht ausbilden soll, die nach Verschmutzen leicht entfernbar ist, ist es empfehlenswert, daß das Mittel zusätzlich einen oder mehrere Emulgatoren enthält. Die Konzentration dieser Emulgatoren liegt beispielsweise im Bereich von 0,5 bis 2 Gew.-%. Dabei wählt man die Emulgatoren vorzugsweise aus aus

| Stoff | EWG-Nr. |
|---|---|
| • Mono- und Diglyceride von Speisefettsäuren verestert mit | |
| Essigsäure | (E472a) |
| Milchsäure | (E472b) |
| Citronensäure | (E472c) |
| Weinsäure | (E472d) |
| Monoacetyl-und Diacetylweinsäure | (E472e) |
| Essigsäure und Weinsäure | (E472f) |
| • Na-, K- oder Ca-Verbindungen der Speisefettsäuren | (E470) |
| • Zuckerglyceride | (E474) |
| • Polyglycerinester von Speisefettsäuren | (E475) |

Die Erfindung betrifft die Verwendung der beschriebenen Oberflächenbehandlungsmittel in lebensmittelverarbeitenden Betrieben. Man bringt die Mittel unverdünnt oder maximal mit dem gleichen Volumen Wasser - d. h. auf das doppelte Volumen verdünnt - mit den zu behandelnden Oberflächen in Berührung. Vorzugsweise wurden diese Oberflächen vorher gereinigt. Das Inberührungbringen kann durch alle gängigen Methoden erfolgen. Beispielsweise genannt sei: das Eintauchen der Oberflächen in das - erwünschtenfalls verdünnte - Mittel oder die Benetzung der Oberflächen mit diesem Mittel durch Bestreichen, Bespritzen oder Überschwallen. Die Temperatur, bei der das Mittel angewandt wird, ist unkritisch, so lange das Mittel fließfähig bleibt. Die Einsatztemperatur kann etwa im Bereich zwischen 2 und 80 °C liegen und liegt vorzugsweise im Bereich der Zimmertemperatur, also etwa zwischen 15 und 25 °C.

Dabei betrifft die Erfindung einerseits die Verwendung des Mittels zum Überziehen von Oberflächen von Behältnissen, die für die Aufnahme von Lebensmitteln bestimmt sind. Hierdurch wird eine vollständige und leichte Entleerung dieser Behältnisse möglich, ohne daß diese durch angetrocknete Lebensmittel erschwert wird. Andererseits kann das Mittel verwendet werden, um sonstige Oberflächen wie Tische, Wände, Rohrleitungen oder Entlüftungseinrichtungen gegen festhaftenden Schmutz zu sichern. Der sich auf das feuchtbleibende Mittel anlagernde Schmutz wie beispielsweise Staub kommt mit der eigentlichen Oberfläche nicht in Berührung und kann daher sehr leicht durch Abwischen oder Abspritzen mit Wasser entfernt werden.

### Ausführungsbeispiele

Erfindungsgemäβ zü verwendende Mittel können beispielsweise folgendermaßen zusammengesetzt sein (Angaben in Gew.-%)

| | Beispiel 1 | Beispiel 2 | Beispiel 3 |
|---|---|---|---|
| vollentsalztes Wasser | 96,8 | 96,8 | 96,8 |
| Glycerin | 2,0 | 2,0 | 2,0 |
| Na-benzoat | 0,5 | 0,5 | 0,5 |
| Methylcellulose | 0,7 | | |
| Xanthan | | 0,7 | |
| Gelatine | | | 0,7 |
| | | | |
| Viskosität n. Brookfield (Spindel 3, 22°C, 12U/Min.) | 4390 mPas | 4930 mPas | 5540 mPas |
| Trocknungsverhalten (1g auf Glasoberfläche. Beurteilung nach 7 Tagen) | gummiartig feucht | gummiartig feucht | gummiartig feucht |

Zur Herstellung kann man, wie nachfolgend am Beispiel 1 gezeigt, folgendermaßen vorgehen: Man legt das Wasser vor, gibt Glycerin und Natriumbenzoat zu und löst diese vollständig auf. Dann streut man unter Rühren Methylcellulose langsam auf die Oberfläche des beim Rühren entstehenden Flüssigkeitskegels. Sobald die Viskosität ansteigt, wird die Rührgeschwindigkeit verringert, um einen Lufteinschluß zu vermeiden. Arbeitet man hierbei unter Vakuum, kann man einen Einschluß von Luftblasen besser verhindern. Bei einer Umdrehungszahl des Rührers von etwa 1 500 U/Min beträgt die Lösegeschwindigkeit etwa 30 Minuten. Bei langsamerer Rührgeschwindigkeit kann sie etwa 1 Stunde betragen. Vorzugsweise führt man die Herstellung unter solchen Bedingungen aus, die zur Herstellung von Lebensmittelzusatzstoffen üblich sind.

Die Eigenschaften der erfindungsgemäß zü verwendenden Mittel werden durch folgende Versuche deutlich:

### Beispiel 4: Versuch zur Restentleerung

In je einem Kunststoffbecher (Ø 15cm; Höhe 20cm) werden Fleischstücke (Würfel ca. 3x3cm, 1kg) bei 8°C über einen Zeitraum von 7 Tagen gelagert. Anschließend wird durch Umdrehen des Bechers die Entnahme der Fleischstücke beurteilt (Entleerungsgeschwindigkeiten, verbleibende Restmengen in den Bechern).
Becher 1: unbehandelt
Becher 2: mit Formulierung wie in Beispiel 1 beschrieben behandelt
Ergebnis: Becher 1 vollständiges Entleeren erst durch Mechanik (Klopfen auf Becher) möglich. Es verbleiben Fleischreste im Becher, die an der Wandung kleben.
Becher 2 läßt sich schnell und restlos entleeren.

### Beispiel 5:Reinigungstest

Zum Einsatz kam das Mittel aus Beispiel 1. Auf unterschiedlichen Oberflächen wurde je ein dünner Film des Mittels aufgetragen. Nach einer Trocknungszeit von je 2 h wurden die Oberflächen massiv mit Aktivkohlepulver beaufschlagt. Durch Abspülen mit kaltem Wasser (ca. 2 Minuten ohne Mechanik) wurden a) das Abspülverhalten und b) die Entfernung der Aktivkohle beurteilt. Die Ergebnisse wurden visuell im Vergleich zu unbehandelten Oberflächen ausgewertet.

| Oberfläche nach Abspülen mit kaltem Wasservisuell | | |
|---|---|---|
| Oberfläche | unbehandelt | behandelt |
| Keramik glasiert | deutlicher Grauschleier | sauber |
| Edelstahl (1.4301) | deutlicher Grauschleier | sauber |
| Kunststoff (PVC-HD) | starker Grauschleier | sauber (minimale Rückstände) |
| Glas | deutlicher Grauschleier | sauber |

## Patentansprüche

1. Verwendung eines viskosen Oberflächenbehandlungsmittels, enthaltend:
90 bis 98,5 Gew.-% Wasser,
1 bis 4 Gew.-% einer hygroskopischen Komponente, ausgewählt aus Glycerin und Propylenglykol,
0,2 bis 2 Gew.-% Konservierungsmittel und
soviel Verdickungsmittel, daß die Viskosität der Mischung (bei 22 °C gemessen nach Brookfield, Spindel 3, 12 Umdrehungen pro Minute) im Bereich von 2 000 bis 10 000 mPas liegt, zur Bildung nichtauftrocknender Überzüge auf Oberflächen in lebensmittelverarbeitenden Betrieben und/oder auf Oberflächen, die zum Kontakt mit Lebensmitteln bestimmt sind.

2. Verwendung nach Anspruch 1, **dadurch gekennzeichnet, daß** es 0,3 bis 2 Gew.-% Verdickungsmittel enthält.

3. Verwendung nach einem oder beiden der Ansprüche 1 und 2, **dadurch gekennzeichnet, daß** das Konservierungsmittel ausgewählt ist aus:
Sorbinsäure (und deren Salze)
Benzoesäure (und deren Salze)
Citronensäure (und deren Salze)
Ameisensäure (und deren Salze)
para-Hydroxibenzoesäure-ethylester
para-Hydroxibenzoesäure-ethylester Na-Verbindung
para-Hydroxibenzoesäure-propylester
para-Hydroxibenzoesäure-propylester Na-Verbindung
para-Hydroxibenzoesäure-methylester
para-Hydroxibenzoesäure-methylester Na-Verbindung.

4. Verwendung nach einem oder mehreren der Ansprüche 1 bis 3, **dadurch gekennzeichnet, daß** das Verdickungsmittel ausgewählt ist aus Mono- und Diglyceriden von Speisefettsäuren
Stärke (oxidativ abgebaute)
Agar Agar
Alginate, vorzugsweise
Natriumalginat
Kaliumalginat
Calciumalginat
Carrageen
Guarkemmehl
Johannesbrotkemmehl
Traganth
Xanthan
Cellulose
Methylcellulose
Hydroxypropylcellulose
Hydroxypropylmethylcellulose
Carboxymethylcellulose
Pektin
amidiertes Pektin
Propylenglykolalginat
acetyliertes Distärkephosphat
Stärkeacetat (verestert mit Essigsäureanhydrid)
acetyliertes Distärkeadipat
Gummi arabicum
Gelatine
Albumine
Caseinate

5. Verwendung nach einem oder mehreren der Ansprüche 1 bis 4, **dadurch gekennzeichnet, daß** es zusätzlich 0,5 bis 2 Gew.-% eines oder mehrerer Emulgatoren enthält.

6. Verwendung nach Anspruch 5, **dadurch gekennzeichnet, daß** die Emulgatoren auswählt sind aus:
Mono- und Diglyceriden von Speisefettsäuren, verestert
mit Essigsäure, Milchsäure, Citronensäure, Weinsäure, Monoacetyl- und
Diacetylweinsäure und/oder einer Kombination von Essigsäure und Weinsäure,
Na-, K- oder Ca-Verbindungen der Speisefettsäuren,
Zuckerglyceride,
Polyglycerinester von Speisefettsäuren.

7. Verwendung nach einem oder mehreren der Ansprüche 1 bis 6, **dadurch gekennzeichnet, daß** man das Mittel unverdünnt oder nach Verdünnen mit nicht mehr als dem gleichen Volumen Wasser mit den Oberflächen durch Eintauchen der Oberfläche oder durch Bestreichen, Bespritzen oder Überschwallen in Kontakt bringt.

## Claims

1. Use of a viscous surface treatment agent, which agent includes:
90 to 98.5 wt.-% water,
1 to 4 wt.-% of a hygroscopic component selected from glycerol and propylene glycol,
0.2 to 2 wt.-% preservative and an amount of thickening agent to have the viscosity of the mixture (measured at 22°C according to Brookfield, spindle No. 3, 12 revolutions per minute) range from 2,000 to 10,000 mPa·s,
in the formation of non-drying coatings on surfaces in the food-processing industry and/or on surfaces intended for food contact.

2. The use according to claim 1, **characterized in that** the content of thickening agent ranges from 0.3 to 2 wt.-%.

3. The use according to one or both of claims 1 and 2, **characterized in that** the preservative is selected from:
sorbic acid (and salts thereof),
benzoic acid (and salts thereof),
citric acid (and salts thereof),
formic acid (and salts thereof),
ethyl p-hydroxybenzoate,
ethyl p-hydroxybenzoate Na compound,
propyl p-hydroxybenzoate,
propyl p-hydroxybenzoate Na compound,
methyl p-hydroxybenzoate,
methyl p-hydroxybenzoate Na compound.

4. The use according to one or more of claims 1 to 3, **characterized in that** the thickening agent is selected from
mono- and diglycerides of edible fatty acids,
starch (degraded by oxidation)
agar-agar,
alginates, preferably
sodium alginate,
potassium alginate,
calcium alginate,
carrageen,
guar seed meal,
locust bean seed meal,
tragacanth,
xanthan,
cellulose,
methylcellulose,
hydroxypropylcellulose,
hydroxypropylmethylcellulose,
carboxymethylcellulose,
pectin,
amidated pectin
propylene glycol alginate,
acetylated distarch phosphate,
starch acetate (esterified with acetic anhydride),
acetylated distarch adipate,
gum arabicum,
gelatin,
albumins,
caseinates.

5. The use according to one or more of claims 1 to 4, **characterized in that** the agent additionally includes 0.5 to 2 wt.-% of one or more emulsifiers.

6. The use according to claim 5, **characterized in that** the emulsifiers are selected from:
mono- and diglycerides of edible fatty acids esterified with acetic acid, lactic acid, citric acid, tartaric acid, monoacetyl and diacetyl tartaric acid, and/or a combination of acetic acid and tartaric acid,
Na, K or Ca compounds of said edible fatty acids,
sugar glycerides,
polyglycerol esters of edible fatty acids.

7. The use according to one or more of claims 1 to 6, **characterized in that** the agent, undiluted or following dilution with no more than an equal volume of water, is contacted with said surfaces by immersing the surface, or by coating, spraying, or flooding.

## Revendications

1. Utilisation d'un agent de traitement des surfaces visqueux, comprenant :
90 % à 98,5 % en poids d'eau,
1 à 4 % en poids d'un composant hygroscopique, choisi parmi la glycérine et le propylène glycol,
0,2 à 2% en poids d'un agent conservateur et
autant d'agent épaississant qu'il faut pour que la viscosité du mélange (mesurée à 22 °C au viscosimètre Brookfield, aiguille 3, à la vitesse de 12 tours par minutes) se situe dans une plage de 2000 à 10000 mPas, pour former des produits non siccatifs de revêtement sur des surfaces dans les industries de transformation de denrées alimentaires et/ou sur des surfaces qui sont de façon certaine en contact avec des denrées alimentaires.

2. Utilisation selon la revendication 1, **caractérisé en ce qu'**il comprend 0,3 à 2 % en poids d'agent épaississant.

3. Utilisation selon l'une quelconque ou les deux revendications 1 à 2, **caractérisé en ce que** l'agent conservateur est choisi dans le groupe comprenant :
l'acide sorbique (et ses sels)
l'acide benzoïque (et ses sels)
l'acide citrique (et ses sels)
l'acide formique (et ses sels)
le para-hydroxybenzoate d'éthyle
le para-hydroxybenzoate d'éthyle sodé
le para-hydroxybenzoate de propyle
le para-hydroxybenzoate de propyle sodé
le para-hydroxybenzoate de méthyle
le para-hydroxybenzoate de méthyle sodé

4. Utilisation selon l'une quelconque ou plusieurs des revendications 1 à 3, **caractérisé en ce que** l'agent épaississant est choisi dans le groupe comprenant les mono- ou les diglycérides des acides gras alimentaires
l'amidon (oxydé)
l'agar-agar
les alginates, de préférence l'alginate de sodium, l'alginate de potassium, l'alginate de calcium
le carragheen
la farine de graines de guar
la farine de graines de caroube
la gomme tragacanthe
la gomme xanthane
la cellulose
la méthylcellulose
l'hydroxypropylcellulose
l'hydroxypropylméthylcellulose
la carboxyméthylcellulose
la pectine
la pectine amidée
l'alginate de propylène glycol
le phosphate de diamidon acétylé
l'acétate d'amidon (estérifié avec l'anhydride de l'acide acétique)
l'adipate de diamidon acétylé
la gomme arabique
la gélatine
l'albumine
le sel de caséine

5. Utilisation selon l'une quelconque ou plusieurs des revendications 1 à 4, **caractérisé en ce qu'**il contient en outre 0,5 à 2 % en poids d'un ou plusieurs agents émulsifiants.

6. Utilisation selon la revendication 5, **caractérisé en ce que** les agents émulsifiants sont choisis dans le groupe comprenant :
les mono- et les diglycérides des acides gras alimentaires, estérifiés avec l'acide acétique, l'acide lactique, l'acide citrique, l'acide tartrique, l'acide monoacétyltartrique, l'acide diacétyltartrique, et/ou une combinaison d'acide acétique et d'acide tartrique,
les sels de sodium, de potassium ou de calcium des acides gras alimentaires,
les sucroglycérides,
les esters polyglycériques d'acides gras alimentaires,

7. Utilisation selon l'une quelconque ou plusieurs des revendications 1 à 6, **caractérisé en ce que** l'on met en contact l'agent, non-dilué ou dilué avec pas plus du même volume d'eau, avec la surface par trempage ou par enduction, par pulvérisation ou par mini-vague.
